# EUROPÄISCHE PATENTSCHRIFT

(11) **EP 3 526 114 B1**
(45) Veröffentlichungstag und Bekanntmachung des Hinweises auf die Patenterteilung: **06.01.2021**
(21) Anmeldenummer: 17783819.0
(22) Anmeldetag: 09.10.2017
(51) Int. Cl.: B63G 8/00

(54) **SCHNELLBELADESYSTEM FÜR EIN UNTERSEEBOOT**
QUICK-LOADING SYSTEM FOR A SUBMARINE
SYSTÈME DE CHARGEMENT RAPIDE POUR UN SOUS-MARIN

(30) Priorität: 14.10.2016 DE 102016220027
(43) Veröffentlichungstag der Anmeldung: 21.08.2019
(73) Patentinhaber: thyssenkrupp Marine Systems GmbH, 24143 Kiel (DE); thyssenkrupp AG, 45143 Essen (DE)
(72) Erfinder: JUNGE, Matthias, 24247 Mielkendorf (DE); MUNDT, Marco, 24229 Dänischenhagen (DE)
(74) Vertreter: thyssenkrupp Intellectual Property GmbH
(86) Internationale Anmeldenummer: PCT/EP2017/075588
(87) Internationale Veröffentlichungsnummer: WO 2018/069202

(56) Entgegenhaltungen:
- DE-A1- 1 756 918
- FR-A1- 3 022 231
- US-A- 1 783 221

## Beschreibung

Die Erfindung betrifft ein Schnellbeladesystem für Unterseeboote und ein Verfahren zum Schnellbeladen, wobei das Schnellbeladesystem Rücksicht auf die geometrisch sehr beengten Verhältnisse im Inneren eines Unterseeboots und die hohe Integrationsdichte eines Unterseeboots Rücksicht nimmt.

Durch die zunehmende Automatisierung werden die Besatzungen von Schiffen immer weiter reduziert. Dieser Trend setzt sich auch auf militärischen Schiffen fort und auch die Besatzungen von Unterseebooten werden reduziert. Gleichzeitig ist jedoch die Forderung auf eine lange Standzeit auf See gegeben. Gleichzeitig soll die Zeit im Hafen möglichst minimiert werden. Dieses führt dazu, dass beispielsweise mehr Vorräte für einen längeren Aufenthalt von einer immer kleiner werdenden Besatzung in immer kürzerer Zeit in ein Unterseeboot geladen werden müssen. Aufgrund der beengten Verhältnisse ist bisher nur eine manuelle Beladung möglich.

Aus der US 2009 / 0 317 212 A1 ist ein Ladesystem mit Schienen für den Transport von Containern bekannt.

Aus der FR 3 022 231 ist ein Ladesystem mit Schienen für den Transport von Batterien bekannt.

Aus der DE 17 56 918 A ist eine bordeigene Krananlage für die Verladung von Conatinern auf Schiffen bekannt, wobei der Kran auf Schienen verfahrbar ist.

Aus der US 1 783 221 A ist ein Notfallversorgungssystem mit einem Rohr und Mitteln für den Druckausgleich bekannt.

Aufgabe der Erfindung ist es, ein Schnellbeladesystem bereit zu stellen, welches es einer kleinen Besatzung ermöglicht, die benötigten Vorräte in kürzerer Zeit an Bord zu nehmen.

Gelöst wird diese Aufgabe durch ein Schnellbeladesystem mit den in Anspruch 1 angegebenen Merkmalen sowie das Verfahren mit den in Anspruch 18 angegebenen Merkmalen. Vorteilhafte Weiterbildungen ergeben sich aus den Unteransprüchen, der nachfolgenden Beschreibung sowie den Zeichnungen.

Das erfindungsgemäße Schnellbeladesystem für ein Unterseeboot besteht aus wenigstens einem ersten Container, wenigstens einem ersten Schienenelement, wenigstens einem ersten Gleitelement und wenigstens einem ersten Verbindungselement. Das wenigstens eine erste Gleitelement ist zum Gleiten in dem wenigstens einen ersten Schienenelement ausgebildet. Das wenigstens eine erste Verbindungselement ist mit dem wenigstens einen ersten Gleitelement und dem wenigstens einen ersten Container verbindbar. Der wenigstens eine erste Container kann über das wenigstens eine erste Verbindungselement und das wenigstens eine erste Gleitelement hängend unter dem wenigstens einen Schienenelement anordnet werden. Das wenigstens eine erste Gleitelement ist aus wenigstens einem ersten Basiselement und einem zweiten Basiselement aufgebaut, wobei das wenigstens eine erste Basiselement und das zweite Basiselement jeweils einen Grundkörper und wenigstens einen ersten Gleitkörper aufweist. Der wenigstens eine erste Gleitkörper ist am Grundkörper angeordnet. Der Grundkörper des wenigstens einen ersten Basiselements ist mit dem Grundkörper des wenigstens einen zweiten Basiselements über eine Verbindungsachse miteinander verbunden. Die Verbindungsachse ermöglicht eine horizontale Verkippung und eine vertikale Verkippung des Grundkörper des wenigstens einen ersten Basiselements gegenüber dem Grundkörper des wenigstens einen zweiten Basiselements, wobei.

Der erfindungsgemäße Aufbau des wenigstens einen ersten Gleitelements und die daraus resultierende Beweglichkeit ermöglicht es, dass das wenigstens eine erste Schienenelement im Inneren eines Unterseeboots dem Verlauf der Gänge folgen kann und auch beispielsweise im Bereich von Schotts dem Höhenverlauf folgen kann, wobei der Verlauf der Gänge in einem Unterseeboot nicht für ein Belade- bzw. Transportsystem optimiert sein kann.

Gleiten umfasst im Sinne der Erfindung alle reibungsarmen Bewegungsformen gegeneinander und umfasst auch die drehbar gelagerten Rollen, welche eine Rollbewegung ausführen.

In einer weiteren Ausführungsform der Erfindung weist das wenigstens eine erste Schienenelement einen rechteckigen Querschnitt auf, wobei das wenigstens eine erste Schienenelement an der Unterseite eine schlitzförmige Öffnung zur Durchführung des Verbindungselements aufweist.

In einer weiteren bevorzugten Ausführungsform der Erfindung weist das wenigstens eine erste Schienenelement an den Enden an den Stirnseiten Öffnungen auf, um das wenigstens eine erste Gleitelement entnehmen zu können.

In einer weiteren Ausführungsform der Erfindung weist das wenigstens eine erste Schienenelement an den Enden an der Unterseite Öffnungen auf, um das wenigstens eine erste Gleitelement entnehmen zu können.

In einer weiteren Ausführungsform der Erfindung weist der Grundkörper eine kugelförmige Grundform auf. Ein erster Gleitkörper und ein zweiter Gleitkörper sind an auf zwei gegenüberliegenden Seiten des Grundkörpers angeordnet und befestigt. Die kugelförmige Grundform weist an den beiden Seiten zur Anbringung des ersten Gleitkörpers und des zweiten Gleitkörpers jeweils eine Abflachung auf. Die kugelförmige Grundform weist an einer Seite eine Vertiefung auf, wobei die Vertiefung zur Aufnahme einer Seite eines weiteren Grundkörpers zur Verbindung über eine Verbindungsachse ausgebildet ist.

Durch die kugelförmige Grundform kann eine kompakte Bauweise ermöglicht werden, welche die hohe Beweglichkeit, welche im Inneren des Unterseeboots notwendig ist, bereitstellen kann. Des Weiteren ist diese Ausgestaltung optimal zur Aufnahme der auftretenden Kräfte ausgebildet.

In einer weiteren Ausführungsform der Erfindung weist die kugelförmige Grundform eine Abflachung zur Anbringung eines Verbindungselements auf.

In einer weiteren Ausführungsform der Erfindung weist die kugelförmige Grundform einen Durchmesser von wenigstens 10 mm, bevorzugt von wenigstens 20 mm, besonders bevorzugt von wenigstens 25 mm auf. Die kugelförmige Grundform weist einen Durchmesser von höchstens 60 mm, bevorzugt von höchstens 40 mm, besonders bevorzugt von höchstens 35 mm auf.

In einer weiteren Ausführungsform der Erfindung kann die horizontale Verkippung und die vertikale Verkippung um wenigstens 15°, bevorzugt um wenigstens 30°, besonders bevorzugt um wenigstens 45° erfolgen. Die horizontale Verkippung und die vertikale Verkippung kann um höchstens 75°, bevorzugt um höchstens 60°, besonders bevorzugt um höchstens 50° erfolgen.

In einer weiteren Ausführungsform der Erfindung weist der wenigstens eine erste Container eine zylindrische Grundform auf. Die zylindrische Grundform des wenigstens einen ersten Containers ermöglicht die Einbringung durch ein Luk oder ein Waffenrohr, welche jeweils üblicherweise einen runden Querschnitt aufweisen und somit optimal ausgenutzt werden können.

In einer weiteren Ausführungsform der Erfindung sind die Gleitkörper in Form von Rollen ausgeführt, wobei die Rollen in einer bevorzugten Ausführungsform drehbar gelagert sind.

In einer weiteren Ausführungsform der Erfindung ist der wenigstens eine erste Container über ein erstes Verbindungselement und ein zweites Verbindungselement mit dem wenigstens einen ersten Gleitelement verbunden. Die Verbindung über zwei Verbindungselemente ist daher optimal, da zwei Verbindungspunkte die Beweglichkeit des wenigstens einen ersten Gleitelements geringst möglich einschränken, die Kraftverteilung optimieren und insbesondere bei Schräglage für eine bessere Stabilisierung des wenigstens einen ersten Containers sorgen.

In einer weiteren Ausführungsform der Erfindung weist der wenigstens eine erste Container einen Durchmesser von wenigstens 450 mm und von höchstens 550 mm auf. Luken und Waffenrohre sind oftmals auf die Aufnahme von Waffen mit einem Durchmesser von 21 Zoll (533 mm) ausgelegt. Damit der wenigstens eine erste Container so groß wie möglich ist, sollte dieses Maß ausgenutzt werden. Ein Überschreiten würde verhindern, dass der wenigstens eine erste Container in das Innere des Unterseeboots eingeführt werden könnte. Für Staaten mit anderen Standarddurchmessern für Waffen, insbesondere außerhalb der NATO, ergeben sich naturgemäß andere bevorzugte maximale Durchmesser, die jeweils dem nationalen Standard des Waffendurchmessers entsprechen.

In einer weiteren Ausführungsform der Erfindung weist der wenigstens eine erste Container einen Länge von wenigstens 800 mm, bevorzugt von wenigstens 1000 mm, besonders bevorzugt von wenigstens 1200 mm auf. Der wenigstens eine erste Container weist einen Länge von höchstens 2200 mm, bevorzugt von höchstens 1900 mm, besonders bevorzugt von höchstens 1600 mm auf.

In einer weiteren Ausführungsform der Erfindung weist der wenigstens eine erste Container an der Zylinderaußenseite Abstandshalter auf.

In einer weiteren Ausführungsform der Erfindung weist das wenigstens eine erste Verbindungselement eine erste Klappachse und eine zweite Klappachse auf, wobei die erste Klappachse und die zweite Klappachse dazu dienen, dass der wenigstens eine erste Container gegenüber dem wenigstens einem ersten Schienenelement anhebbar ist.

Durch die Verkürzung des Abstandes beim Anhebend des wenigstens einen ersten Containers kann es dazu kommen, dass die Beweglichkeit des wenigstens einen ersten Gleitelements negativ beeinflusst wird. Auf der anderen Seite ist es vorteilhaft, den wenigstens einen ersten Container so lang wie möglich zu machen, wobei zum Beispiel im Bereich von Schotten die Durchgangshöhe reduziert ist. Um in diesen Bereichen Platz einzusparen, kann ein Anheben sinnvoll sein, wobei für diese Zeit eine Einschränkung der Beweglichkeit des wenigstens einen ersten Gleitelements hinnehmbar ist.

In einer weiteren Ausführungsform der Erfindung dient die erste Klappachse zur trennbaren Verbindung zwischen dem wenigstens einen ersten Verbindungselement und dem wenigstens einen ersten Container.

In einer weiteren Ausführungsform der Erfindung weist der wenigstens eine erste Container eine Tür auf, wobei die Tür auf der Zylinderaußenwand angeordnet ist. Vorzugsweise bildet die Tür einen Teil der Zylinderaußenwand.

In einer weiteren Ausführungsform der Erfindung ist der wenigstens eine erste Container als Kühlcontainer ausgeführt.

In einer weiteren Ausführungsform der Erfindung ist der wenigstens eine erste Container sprengstoffsicher ausgeführt.

In einer weiteren Ausführungsform der Erfindung weist der wenigstens eine erste Container im Inneren wenigstens einen kreisförmigen Boden zur Unterteilung des Stauraums des wenigstens einen ersten Containers auf.

In einem weiteren Aspekt betrifft die Erfindung ein Verfahren zur Schnellbeladung eines Unterseeboots mittels eines erfindungsgemäßen Schnellbeladesystems, wobei das Verfahren die folgenden Schritte umfasst:
a) Installation wenigstens eines ersten Schienenelements im Inneren des Unterseeboots,
b) Einbringen wenigstens eines ersten Containers in ein Unterseeboot an einer Einbringposition,
c) Verbinden wenigstens eines ersten Containers mit wenigstens einem ersten Verbindungselement,
d) Verschieben des wenigstens einen ersten Containers an die Entladeposition,
e) Entladen des wenigstens einen ersten Containers,
f) Verschieben des wenigstens einen ersten Containers an eine Ausbringposition des Unterseeboots,
g) Trennen wenigstens eines ersten Containers von wenigstens einem ersten Verbindungselement,
h) Ausbringen des wenigstens einen ersten Containers.

In einer weiteren Ausführungsform der Erfindung wird als Einbringposition und/oder als Ausbringposition ein Luk oder ein Waffenrohr gewählt.

In einer weiteren Ausführungsform der Erfindung werden die Einbringposition und die Ausbringposition unterschiedlich gewählt. Beispielsweise und bevorzugt wird als Einbringposition ein Luk am Heck und als Ausbringposition ein Luk am Bug oder andersherum gewählt.

In einer weiteren Ausführungsform der Erfindung erfolgen die Schritte a) und b) im Hafen, wobei als Einbringposition ein Waffenrohr gewählt wird. Die Schritte c) bis g) erfolgen während des Einsatzes auf See, wobei als Ausbringposition ein Waffenrohr gewählt wird. Schritt h) erfolgt dann wieder im Hafen. Der wenigstens eine erste Container wird zwischen Schritt b) und Schritt c) sowie zwischen Schritt g) und Schritt h) in einer Waffenmulde gelagert. Ein solches Verfahren ist für Einsätze besonders vorteilhaft, bei welchem nur eine geringe Anzahl an Waffen mitgeführt werden sollen, dafür aber für eine hohe Standzeit oder für einen speziellen Einsatz eine große Menge an Verbrauchsmitteln benötigt wird.

In einer weiteren Ausführungsform der Erfindung erfolgt das Einbringen in Schritt b) und/oder das Ausbringen in Schritt h) durch ein Luk mit Hilfe eines Hydraulikzylinders, eines Krans oder eines Seilzugs.

In einer weiteren Ausführungsform der Erfindung erfolgt die Installation des wenigstens einen ersten Schienenelements in Schritt a) derart, dass zwischen festinstallierten Teilen des wenigstens einen ersten Schienenelements Teilsegmente, insbesondere im Bereich von Schotts, eingefügt werden. Beispielsweise kann im Bereich der Schotts ein wenigstens erstes Schienenelement nicht permanent verlaufen. Daher wird dieser Bereich durch das Einfügen eines Teilsegments vervollständig.

Nachfolgend ist das erfindungsgemäße Schnellbeladesystem anhand eines in den Zeichnungen dargestellten Ausführungsbeispiels näher erläutert.
- Fig. 1: Querschnitt durch ein Unterseeboot mit einem Schnellbeladesystem
- Fig. 2: Gleitelement
- Fig. 3: Schienenelement mit Container
- Fig. 4: Schienenelement im Querschnitt mit Gleitelement, Verbindungselement und Container
- Fig. 5: Gleitelement, Verbindungselement und Container
- Fig. 6: Gleitelement, Verbindungselement und Container
- Fig. 7: Waffenmulde mit vier Containern
- Fig. 8: geöffneter Container
- Fig. 9: Ablaufdiagramm des Verfahrens

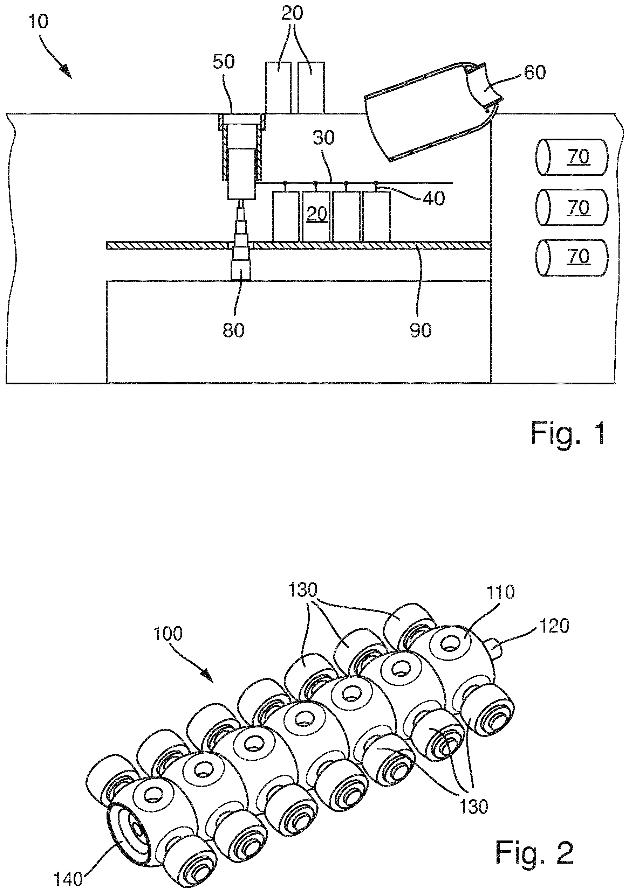

Die Fig. 1 bis Fig. 8 zeigen ein beispielhaftes Schnellbeladesystem beziehungsweise Teile oder Ausschnitte davon.

In Fig. 1 ist schematisch ein Querschnitt durch ein Unterseeboot 10 gezeigt. Das Unterseeboot 10 wird gerade mit sieben Containern 20 beladen, wozu ein Schnellbeladesystem genutzt wird. Das Schnellbeladesystem weist ein Schienenelement 30 auf, in welchem hier verborgen ein Gleitelement 100 angeordnet. An dem Gleitelement 100 sind vier Verbindungselement 40 und an den Verbindungselementen 40 Container 20 angeordnet. Die Container 20 werden im gezeigten Beispiel durch ein Luk 50 eingebracht. Alternativ oder zusätzlich können die Container 20 auch durch ein Waffenluk 60 oder ein Waffenrohr 70 eingebracht werden. Die Container 20 werden im gezeigten Beispiel auf das obere Deck 90 verbracht, das untere Deck ist an dieser Stelle mit Akkumulatoren belegt und dient nicht als Stauraum.

Fig. 2 zeigt das in Fig. 1 nicht sichtbare Gleitelement 100, welches in dem dargestellten Abschnitt aus sieben Grundkörpern 110 besteht. Benachbarte Grundkörper 110 sind über eine Verbindungsachse 120 mit einander beweglich verbunden. Jeder Grundkörper 110 weist eine Vertiefung 140 auf, in welche der benachbarte Grundkörper 110 mit der Verbindungsachse 120 eingreift und zu einer bewegbaren Verbindung führt. Durch die kugelförmige Form des Grundkörpers 110 sind eine horizontale und eine vertikale Bewegung der benachbarten Grundkörper 110 gegeneinander möglich. Um in dem Schienenelement 30 eine möglichst reibungsarme Bewegung zu ermöglichen, weist das Gleitelement 100 seitlich drehbar gelagerte Rollen 130 auf. Alternativ können die Rollen 130 auch nicht drehbar als Gleitkörper angeordnet sein.

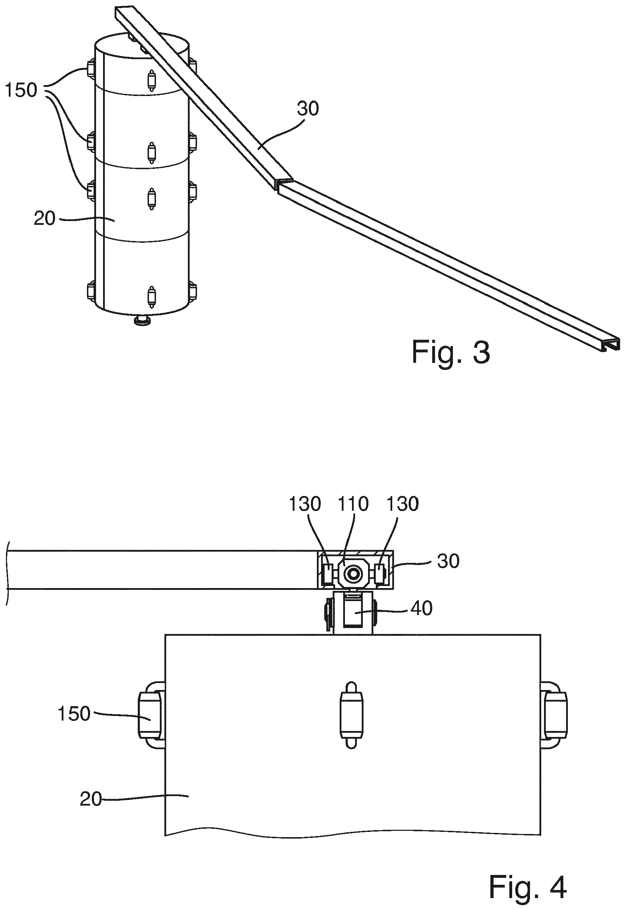

Fig. 3 zeigt ein Schienenelement 30, an welchem ein Container 20 angeordnet ist. Der Container 20 weist eine Reihe von Abstandshaltern 150 auf, welche eine Beschädigung des Containers 20 oder des Unterseeboots 10 an engen Stellen, beispielsweise dem Luk 50 oder dem Waffenrohr 70, vermeiden helfen.

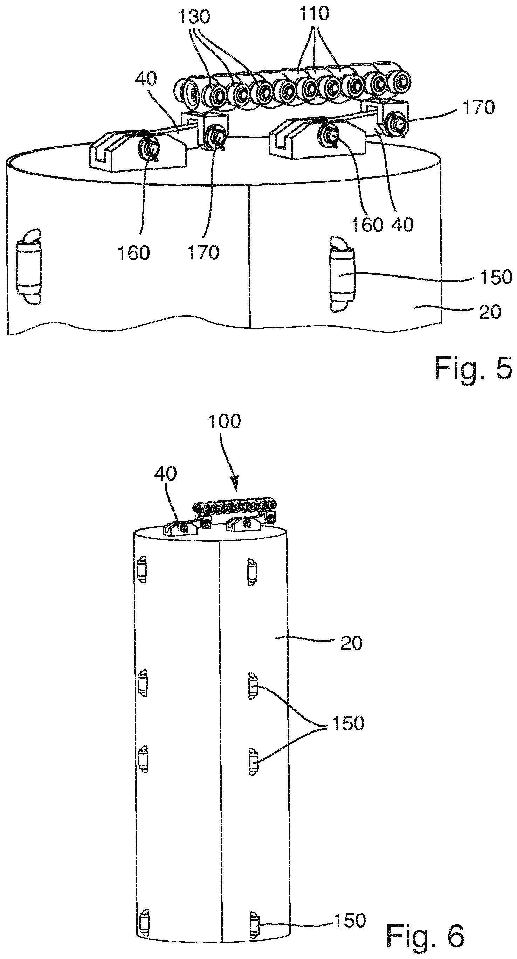

Zur Verdeutlichung des Gleitens des Gleitelements 100 in dem Schienenelement 30 ist das Schienenelement 30 in Fig. 4 im Querschnitt gezeigt. Das Schienenelement 30 weist einen rechteckigen Querschnitt mit einer Auslassung auf der Unterseite auf. Im Inneren des Schienenelements 30 gleitet das Gleitelement 100, von dem hier ein Grundkörper 110 mit zwei Rollen 130 zu sehen sind. Die Rollen 130 berühren das Schienenelement 30. Die bevorzugt rollend gelagerten Rollen reduzieren so die Reibung. In Fig. 4 ist der Container 20 im angehobenen Zustand gezeigt, das Verbindungselement 40 ist hochgelappt. Dieses ist in Fig. 5 besser zu erkennen, da das Schienenelement 30 weggelassen ist. Der Container 20 ist über zwei Verbindungselemente 40 mit dem Gleitelement 100 verbunden, hier durch die Grundkörper 110 und die Rollen 130 erkennbar. Die Verbindungselemente 40 weisen jeweils eine erste Klappachse 160 und eine zweite Klappachse 170 auf, mit deren Hilfe das Verbindungselement 40 geklappt und so der Container 20 angehoben werden kann. Die erste Klappachse 160 ist so ausgeführt, dass die erste Klappachse 160 entfernt und so der Container 20 vom Verbindungselement 40 getrennt werden kann. In Fig. 6 ist das Größenverhältnis zwischen dem Container 20, dem Verbindungselement 40 und dem Gleitelement 100 erkennbar sowie eine beispielhafte Anordnung von Abstandshaltern 150 am Container 20.

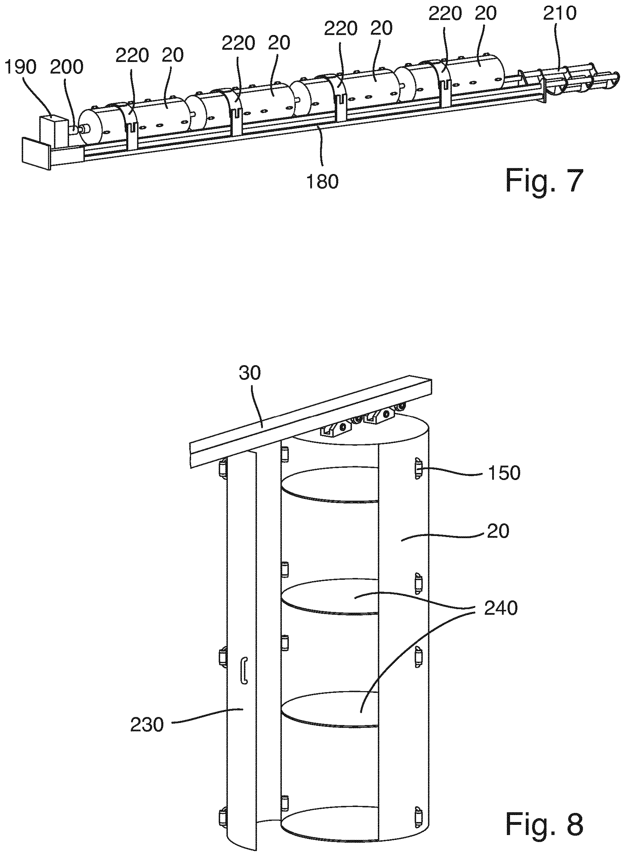

Sollen eine große Anzahl von Containern 20 aufgenommen und im Unterseeboot 10 gelagert werden, so ist eine Einbringung durch ein Waffenrohr 70 sinnvoll. Fig. 7 zeigt, wie die Container 20 dann in einer Waffenmulde 180 gelagert werden. Die einzelnen Container 20 sind mittels jeweils eines Klemmbandes 220 in der Waffenmulde 180 gesichert. Um die Container 20 durch das Waffenrohr 70 wieder von Bord bringen zu können, wird die Waffenmulde 180 mit einer Brücke 210 mit dem Waffenrohr 70 verbunden. Über den Ausschubmotor 190 wird der Ladebock 200 beispielsweise mittels einer Schubkette bewegt. Der Ladebock 200 schiebt dann die Container 20 über die Brücke 210 in das Waffenrohr 70.

Fig. 8 zeigt einen Container 20 mit einer geöffneten Tür 230 und drei Containerböden 240.

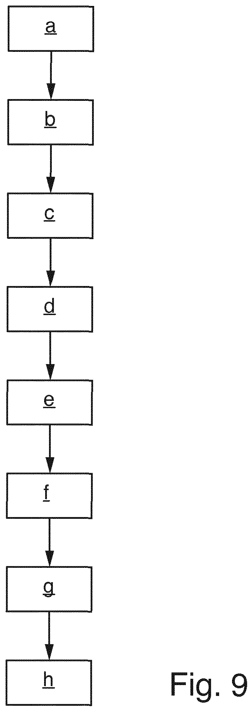

Fig. 9 zeigt ein Ablaufdiagramm des erfindungsgemäßen Verfahrens. Das Verfahren weist die folgenden Schritte auf:
a) Installation wenigstens eines ersten Schienenelements im Inneren des Unterseeboots,
b) Einbringen wenigstens eines ersten Containers in ein Unterseeboot an einer Einbringposition,
c) Verbinden wenigstens eines ersten Containers mit wenigstens einem ersten Verbindungselement,
d) Verschieben des wenigstens einen ersten Containers an die Entladeposition,
e) Entladen des wenigstens einen ersten Containers,
f) Verschieben des wenigstens einen ersten Containers an eine Ausbringposition des Unterseeboots,
g) Trennen wenigstens eines ersten Containers von wenigstens einem ersten Verbindungselement,
h) Ausbringen des wenigstens einen ersten Containers.

### Bezugszeichen

- 10: Unterseeboot
- 20: Container
- 30: Schienenelement
- 40: Verbindungselement
- 50: Luk
- 60: Waffenluk
- 70: Waffenrohr
- 80: Hydraulikzylinder
- 90: oberes Deck
- 100: Gleitelement
- 110: Grundkörper
- 120: Verbindungsachse
- 130: Rolle
- 140: Vertiefung
- 150: Abstandshalter
- 160: erste Klappachse
- 170: zweite Klappachse
- 180: Waffenmulde
- 190: Ausschubmotor
- 200: Ladebock
- 210: Brücke
- 220: Klemmband
- 230: Tür
- 240: Containerboden

## Patentansprüche

1. Schnellbeladesystem für ein Unterseeboot (10) bestehend aus wenigstens einem ersten Container (20) und wenigstens einem ersten Schienenelement (30), wobei das Schnellbeladesystem wenigstens ein erstes Gleitelement (100) und wenigstens ein erstes Verbindungselement (40) aufweist, wobei das wenigstens eine erste Gleitelement (100) zum Gleiten in dem wenigstens einen ersten Schienenelement (30) ausgebildet ist, wobei das wenigstens eine erste Verbindungselement (40) mit dem wenigstens einen ersten Gleitelement (100) und dem wenigstens einen ersten Container (20) verbindbar ist, wobei der wenigstens eine erste Container (20) über das wenigstens eine erste Verbindungselement (40) und das wenigstens eine erste Gleitelement (100) hängend unter dem wenigstens einen Schienenelement (30) anordnet werden kann, **dadurch gekennzeichnet, dass** das wenigstens eine erste Gleitelement (100) aus wenigstens einem ersten Basiselement und einem zweiten Basiselement aufgebaut ist, wobei das wenigstens eine erste Basiselement und das zweite Basiselement jeweils einen Grundkörper (110) und wenigstens einen ersten Gleitkörper aufweist, wobei der wenigstens eine erste Gleitkörper am Grundkörper (110) angeordnet ist, wobei der Grundkörper (110) des wenigstens einen ersten Basiselements mit dem Grundkörper (110) des wenigstens einen zweiten Basiselements über eine Verbindungsachse (120) miteinander verbunden ist, wobei die Verbindungsachse (120) eine horizontale Verkippung und eine vertikale Verkippung des Grundkörper (110) des wenigstens einen ersten Basiselements gegenüber dem Grundkörper (110) des wenigstens einen zweiten Basiselements ermöglicht.

2. Schnellbeladesystem nach Anspruch 1, **dadurch gekennzeichnet, dass** der Grundkörper (110) eine kugelförmige Grundform aufweist, wobei ein erster Gleitkörper und ein zweiter Gleitkörper an auf zwei gegenüberliegenden Seiten des Grundkörpers (110) angeordnet und befestigt sind, wobei die kugelförmige Grundform an den beiden Seiten zur Anbringung des ersten Gleitkörpers und des zweiten Gleitkörpers jeweils eine Abflachung aufweist, wobei die kugelförmige Grundform an einer Seite eine Vertiefung (140) aufweist, wobei die Vertiefung (140) zur Aufnahme einer Seite eines weiteren Grundkörpers (110) zur Verbindung über eine Verbindungsachse (120) ausgebildet ist.

3. Schnellbeladesystem nach Anspruch 2, **dadurch gekennzeichnet, dass** die kugelförmige Grundform eine Abflachung zur Anbringung eines Verbindungselements (40) aufweist.

4. Schnellbeladesystem nach einem der Ansprüche 2 oder 3, **dadurch gekennzeichnet, dass** die kugelförmige Grundform einen Durchmesser von wenigstens 10 mm aufweist, die kugelförmige Grundform einen Durchmesser von höchstens 60 mm aufweist.

5. Schnellbeladesystem nach einem der vorstehenden Ansprüche, **dadurch gekennzeichnet, dass** die horizontale Verkippung und die vertikale Verkippung um wenigstens 15° erfolgen kann, wobei die horizontale Verkippung und die vertikale Verkippung um höchstens 75° erfolgen kann.

6. Schnellbeladesystem nach einem der vorstehenden Ansprüche, **dadurch gekennzeichnet, dass** der wenigstens eine erste Container (20) eine zylindrische Grundform aufweist.

7. Schnellbeladesystem nach einem der vorstehenden Ansprüche, **dadurch gekennzeichnet, dass** die Gleitkörper in Form von Rollen (130) ausgeführt sind.

8. Schnellbeladesystem nach einem der vorstehenden Ansprüche, **dadurch gekennzeichnet, dass** der wenigstens eine erste Container (20) über ein erstes Verbindungselement (40) und ein zweites Verbindungselement (40) mit dem wenigstens einen ersten Gleitelement (100) verbunden ist.

9. Schnellbeladesystem nach einem der vorstehenden Ansprüche, **dadurch gekennzeichnet, dass** der wenigstens eine erste Container (20) einen Durchmesser von wenigstens 450 mm und von höchstens 550 mm aufweist.

10. Schnellbeladesystem nach einem der vorstehenden Ansprüche, **dadurch gekennzeichnet, dass** der wenigstens eine erste Container (20) einen Länge von wenigstens 800 mm aufweist, wobei der wenigstens eine erste Container (20) einen Länge von höchstens 2200 mm aufweist.

11. Schnellbeladesystem nach einem der vorstehenden Ansprüche, **dadurch gekennzeichnet, dass** der wenigstens eine erste Container (20) an der Zylinderaußenseite Abstandshalter (150) aufweist.

12. Schnellbeladesystem nach einem der vorstehenden Ansprüche, **dadurch gekennzeichnet, dass** das wenigstens eine erste Verbindungselement (40) eine erste Klappachse (160) und eine zweite Klappachse (170) aufweist, wobei die erste Klappachse (160) und die zweite Klappachse (170) dazu dienen, dass der wenigstens eine erste Container (20) gegenüber dem wenigstens einem ersten Schienenelement (30) anhebbar ist.

13. Schnellbeladesystem nach Anspruch 12, **dadurch gekennzeichnet, dass** die erste Klappachse (160) zur trennbaren Verbindung zwischen dem wenigstens einen ersten Verbindungselement (40) und dem wenigstens einen ersten Container (20) dient.

14. Schnellbeladesystem nach einem der vorstehenden Ansprüche, **dadurch gekennzeichnet, dass** der wenigstens eine erste Container (20) eine Tür (230) aufweist, wobei die Tür (230) auf der Zylinderaußenwand angeordnet ist.

15. Schnellbeladesystem nach einem der vorstehenden Ansprüche, **dadurch gekennzeichnet, dass** der wenigstens eine erste Container (20) als Kühlcontainer ausgeführt ist.

16. Schnellbeladesystem nach einem der vorstehenden Ansprüche, **dadurch gekennzeichnet, dass** der wenigstens eine erste Container (20) sprengstoffsicher ausgeführt ist.

17. Schnellbeladesystem nach einem der vorstehenden Ansprüche, **dadurch gekennzeichnet, dass** der wenigstens eine erste Container (20) im Inneren wenigstens einen kreisförmigen Boden zur Unterteilung des Stauraums des wenigstens einen ersten Containers (20) aufweist.

18. Verfahren zur Schnellbeladung eines Unterseeboots (10) mittels eines Schnellbeladesystems nach einem der vorstehenden Ansprüche, wobei das Verfahren die folgenden Schritte umfasst:
a) Installation wenigstens eines ersten Schienenelements (30) im Inneren des Unterseeboots (10),
b) Einbringen wenigstens eines ersten Containers (20) in ein Unterseeboot (10) an einer Einbringposition,
c) Verbinden wenigstens eines ersten Containers (20) mit wenigstens einem ersten Verbindungselement (40),
d) Verschieben des wenigstens einen ersten Containers (20) an die Entladeposition,
e) Entladen des wenigstens einen ersten Containers (20),
f) Verschieben des wenigstens einen ersten Containers (20) an eine Ausbringposition des Unterseeboots (10),
g) Trennen wenigstens eines ersten Containers (20) von wenigstens einem ersten Verbindungselement (40),
h) Ausbringen des wenigstens einen ersten Containers (20).

19. Verfahren nach Anspruch 18, **dadurch gekennzeichnet, dass** als Einbringposition und/oder als Ausbringposition ein Luk (50) oder ein Waffenrohr (70) gewählt wird.

20. Verfahren nach einem der Ansprüche 18 bis 19, **dadurch gekennzeichnet, dass** die Einbringposition und die Ausbringposition unterschiedlich gewählt werden.

21. Verfahren nach einem der Ansprüche 18 bis 20, **dadurch gekennzeichnet, dass** die Schritte a) und b) im Hafen erfolgen, wobei als Einbringposition ein Waffenrohr (70) gewählt wird, wobei die Schritte c) bis g) während des Einsatzes auf See erfolgen, wobei als Ausbringposition ein Waffenrohr (70) gewählt wird, wobei Schritt h) im Hafen erfolgt, wobei der wenigstens eine erste Container (20) zwischen Schritt b) und Schritt c) sowie zwischen Schritt g) und Schritt h) in einer Waffenmulde (180) gelagert wird.

22. Verfahren nach einem der Ansprüche 18 bis 21, **dadurch gekennzeichnet, dass** das Einbringen in Schritt b) und/oder das Ausbringen in Schritt h) durch ein Luk (50) mit Hilfe eines Hydraulikzylinders (80), eines Krans oder eines Seilzugs erfolgt.

23. Verfahren nach einem der Ansprüche 18 bis 21, **dadurch gekennzeichnet, dass** die Installation des wenigstens einen ersten Schienenelements (30) in Schritt a) derart erfolgt, dass zwischen festinstallierten Teilen des wenigstens einen ersten Schienenelements (30) Teilsegmente eingefügt werden.

## Claims

1. Quick-loading system for a submarine (10) comprising at least one first container (20) and at least one first rail element (30), wherein the quick-loading system has at least one first sliding element (100) and at least one first connection element (40), wherein the at least one first sliding element (100) is designed to slide in the at least one first rail element (30), wherein the at least one first connection element (40) can be connected to the at least one first sliding element (100) and to the at least one first container (20), wherein the at least one first container (20) can be arranged suspended below the at least one rail element (30) by means of the at least one first connection element (40) and the at least one first sliding element (100), **characterized in that** the at least one first sliding element (100) is composed of at least one first base element and one second base element, wherein the at least one first base element and the second base element each have a main body (110) and at least one first sliding body, wherein the at least one first sliding body is arranged on the main body (110), wherein the main body (110) of the at least one first base element is connected to the main body (110) of the at least one second base element by means of a connection shaft (120), wherein the connection shaft (120) allows horizontal tilting and vertical tilting of the main body (110) of the at least one first base element in respect of the main body (110) of the at least one second base element.

2. Quick-loading system according to Claim 1, **characterized in that** the main body (110) has a spherical basic shape, wherein a first sliding body and a second sliding body are arranged on, and fastened to, two opposite sides of the main body (110), wherein the spherical basic shape has a flattened portion on each of the two sides for attaching the first sliding body and the second sliding body, wherein the spherical basic shape has a depression (140) on one side, wherein the depression (140) is designed to receive one side of a further main body (110) for connection by means of a connection shaft (120).

3. Quick-loading system according to Claim 2, **characterized in that** the spherical basic shape has a flattened portion for attaching a connection element (40) .

4. Quick-loading system according to one of Claims 2 or 3, **characterized in that** the spherical basic shape has a diameter of at least 10 mm, the spherical basic shape has a diameter of at most 60 mm.

5. Quick-loading system according to one of the preceding claims, **characterized in that** the horizontal tilting and the vertical tilting can be by at least 15°, wherein the horizontal tilting and the vertical tilting can be by at most 75°.

6. Quick-loading system according to one of the preceding claims, **characterized in that** the at least one first container (20) has a cylindrical basic shape.

7. Quick-loading system according to one of the preceding claims, **characterized in that** the sliding bodies are configured in the form of rollers (130).

8. Quick-loading system according to one of the preceding claims, **characterized in that** the at least one first container (20) is connected to the at least one first sliding element (100) by means of a first connection element (40) and a second connection element (40) .

9. Quick-loading system according to one of the preceding claims, **characterized in that** the at least one first container (20) has a diameter of at least 450 mm and of at most 550 mm.

10. Quick-loading system according to one of the preceding claims, **characterized in that** the at least one first container (20) has a length of at least 800 mm, wherein the at least one first container (20) has a length of at most 2200 mm.

11. Quick-loading system according to one of the preceding claims, **characterized in that** the at least one first container (20) has spacers (150) on the outside of the cylinder.

12. Quick-loading system according to one of the preceding claims, **characterized in that** the at least one first connection element (40) has a first hinged shaft (160) and a second hinged shaft (170), wherein the first hinged shaft (160) and the second hinged shaft (170) are used so that the at least one first container (20) can be raised in respect of the at least one first rail element (30).

13. Quick-loading system according to Claim 12, **characterized in that** the first hinged shaft (160) is used for the separable connection between the at least one first connection element (40) and the at least one first container (20).

14. Quick-loading system according to one of the preceding claims, **characterized in that** the at least one first container (20) has a door (230), wherein the door (230) is arranged on the outer wall of the cylinder.

15. Quick-loading system according to one of the preceding claims, **characterized in that** the at least one first container (20) is designed as a refrigerated container.

16. Quick-loading system according to one of the preceding claims, **characterized in that** the at least one first container (20) has an explosive-proof design.

17. Quick-loading system according to one of the preceding claims, **characterized in that** the at least one first container (20) has at least one circular base in the inside for subdividing the storage space of the at least one first container (20).

18. Method for the quick loading of a submarine (10) by means of a quick-loading system according to one of the preceding claims, wherein the method comprises the following steps:
a) installation of at least one first rail element (30) inside the submarine (10),
b) delivery of at least one first container (20) into a submarine (10) at a delivery position,
c) connection of at least one first container (20) to at least one first connection element (40),
d) movement of the at least one first container (20) to the unloading position,
e) unloading of the at least one first container (20)
f) movement of the at least one first container (20) to a removal position of the submarine (10),
g) separation of at least one first container (20) from at least one first connection element (40),
h) removal of the at least one first container (20).

19. Method according to Claim 18, **characterized in that** a hatch (50) or a weapon tube (70) is selected as the delivery position and/or as the removal position.

20. Method according to one of Claims 18 to 19, **characterized in that** the delivery position and the removal position are differently selected.

21. Method according to one of Claims 18 to 20, **characterized in that** steps a) and b) are carried out in port, a weapon tube (70) being selected as the delivery position, wherein steps c) to g) are carried out during deployment at sea, a weapon tube (70) being selected as the removal position, wherein step h) is carried out in port, the at least one first container (20) being stored in a weapon trough (180) between step b) and step c) and also between step g) and step h).

22. Method according to one of Claims 18 to 21, **characterized in that** the delivery in step b) and/or the removal in step h) is/are carried out through a hatch (50) with the help of a hydraulic cylinder (80), a crane or a cable pull.

23. Method according to one of Claims 18 to 21, **characterized in that** installation of the at least one first rail element (30) in step a) takes place in such a manner that partial segments are inserted between fixedly installed parts of the at least one first rail element (30).

## Revendications

1. Système de chargement rapide d'un sous-marin (10), ledit système comprenant au moins un premier conteneur (20) et au moins un premier élément formant rail (30), le système de chargement rapide comportant au moins un premier élément coulissant (100) et au moins un premier élément de liaison (40), l'au moins un premier élément coulissant (100) étant conçu pour coulisser dans l'au moins un premier élément formant rail (30), l'au moins un premier élément de liaison (40) pouvant être relié à l'au moins un premier élément coulissant (100) et à l'au moins un premier conteneur (20), l'au moins un premier conteneur (20) pouvant être disposé au-dessous de l'au moins un élément formant rail (30) en étant suspendu par l'au moins un premier élément de liaison (40) et l'au moins un premier élément coulissant (100), **caractérisé en ce que** l'au moins un premier élément coulissant (100) comprend au moins un premier élément de base et un deuxième élément de base, l'au moins un premier élément de base et le deuxième élément de base comportant chacun un corps de base (110) et au moins un premier corps coulissant, l'au moins un premier corps coulissant étant disposé sur le corps de base (110), le corps de base (110) de l'au moins un premier élément de base étant relié au corps de base (110) de l'au moins un deuxième élément de base par le biais d'un axe de liaison (120), l'axe de liaison (120) permettant d'incliner horizontalement et d'incliner verticalement le corps de base (110) de l'au moins un premier élément de base par rapport au corps de base (110) de l'au moins un deuxième élément de base.

2. Système de chargement rapide selon la revendication 1, **caractérisé en ce que** le corps de base (110) a une forme de base sphérique, un premier corps coulissant et un deuxième corps coulissant étant disposés et fixés sur deux côtés opposés du corps de base (110), la forme de base sphérique comportant sur chacun des deux côtés un aplatissement destiné à la fixation du premier corps coulissant et du deuxième corps coulissant, la forme de base sphérique comportant un évidement (140) sur un côté, l'évidement (140) étant conçu pour recevoir un côté d'un autre corps de base (110) pour effectuer la liaison par le biais d'un axe de liaison (120).

3. Système de chargement rapide selon la revendication 2, **caractérisé en ce que** la forme de base sphérique comporte un aplatissement destiné à la fixation d'un élément de liaison (40).

4. Système de chargement rapide selon l'une des revendications 2 et 3, **caractérisé en ce que** la forme de base sphérique a un diamètre d'au moins 10 mm, la forme de base sphérique ayant un diamètre d'au plus 60 mm.

5. Système de chargement rapide selon l'une des revendications précédentes, **caractérisé en ce que** l'inclinaison horizontale et l'inclinaison verticale peuvent être effectuées d'au moins 15°, l'inclinaison horizontale et l'inclinaison verticale pouvant être effectuées sur 75° maximum.

6. Système de chargement rapide selon l'une des revendications précédentes, **caractérisé en ce que** l'au moins un premier conteneur (20) a une forme de base cylindrique.

7. Système de chargement rapide selon l'une des revendications précédentes, **caractérisé en ce que** les corps coulissants sont conçus sous forme de galets (130) .

8. Système de chargement rapide selon l'une des revendications précédentes, **caractérisé en ce que** l'au moins un premier conteneur (20) est relié à l'au moins un premier élément coulissant (100) par le biais d'un premier élément de liaison (40) et d'un deuxième élément de liaison (40).

9. Système de chargement rapide selon l'une des revendications précédentes, **caractérisé en ce que** l'au moins un premier conteneur (20) a un diamètre d'au moins 450 mm et d'au plus 550 mm.

10. Système de chargement rapide selon l'une des revendications précédentes, **caractérisé en ce que** l'au moins un premier conteneur (20) a une longueur d'au moins 800 mm, l'au moins un premier conteneur (20) ayant une longueur d'au plus 2200 mm.

11. Système de chargement rapide selon l'une des revendications précédentes, **caractérisé en ce que** l'au moins un premier conteneur (20) comporte des éléments d'espacement (150) du côté extérieur du cylindre.

12. Système de chargement rapide selon l'une des revendications précédentes, **caractérisé en ce que** l'au moins un premier élément de liaison (40) comporte un premier axe de pliage (160) et un deuxième axe de pliage (170), le premier axe de pliage (160) et le deuxième axe de pliage (170) permettant à l'au moins un premier conteneur (20) d'être soulevé par rapport à l'au moins un premier élément formant rail (30).

13. Système de chargement rapide selon la revendication 12, **caractérisé en ce que** le premier axe de pliage (160) est utilisé pour établir la liaison séparable entre l'au moins un premier élément de liaison (40) et l'au moins un premier conteneur (20).

14. Système de chargement rapide selon l'une des revendications précédentes, **caractérisé en ce que** l'au moins un premier conteneur (20) comporte une porte (230), la porte (230) étant disposée sur la paroi extérieure du cylindre.

15. Système de chargement rapide selon l'une des revendications précédentes, **caractérisé en ce que** l'au moins un premier conteneur (20) est conçu comme un conteneur réfrigéré.

16. Système de chargement rapide selon l'une des revendications précédentes, **caractérisé en ce que** l'au moins un premier conteneur (20) est conçu pour être antidéflagrant.

17. Système de chargement rapide selon l'une des revendications précédentes, **caractérisé en ce que** l'au moins un premier conteneur (20) comporte à l'intérieur au moins un fond circulaire destiné à diviser l'espace de stockage de l'au moins un premier conteneur (20).

18. Procédé de chargement rapide d'un sous-marin (10) au moyen d'un système de chargement rapide selon l'une des revendications précédentes, le procédé comprenant les étapes suivantes :
a) installer au moins un premier élément formant rail (30) à l'intérieur du sous-marin (10),
b) introduire au moins un premier conteneur (20) dans un sous-marin (10) à une position de chargement,
c) relier au moins un premier conteneur (20) à au moins un premier élément de liaison (40),
d) déplacer l'au moins un premier conteneur (20) vers la position de déchargement,
e) décharger l'au moins un premier conteneur (20),
f) déplacer l'au moins un premier conteneur (20) vers une position de sortie du sous-marin (10),
g) séparer au moins un premier conteneur (20) d'au moins un premier élément de liaison (40),
h) retirer l'au moins un premier conteneur (20).

19. Procédé selon la revendication 18, **caractérisé en ce qu'**une écoutille (50) ou un canon (70) est choisi comme position d'entrée et/ou comme position de sortie.

20. Procédé selon l'une des revendications 18 et 19, **caractérisé en ce que** la position d'entrée et la position de sortie sont choisies pour être différentes.

21. Procédé selon l'une des revendications 18 à 20, **caractérisé en ce que** les étapes a) et b) sont effectuées au port, un canon (70) étant choisi comme position d'entrée, les étapes c) à g) étant effectuées en mer, un canon (70) étant choisi comme position de sortie, l'étape h) étant effectuée au port, l'au moins un premier conteneur (20) étant stocké dans une cavité d'arme (180) entre l'étape b) et l'étape c) et entre l'étape g) et l'étape h).

22. Procédé selon l'une des revendications 18 à 21, **caractérisé en ce que** l'entrée à l'étape b) et/ou la sortie à l'étape h) sont effectuées par une écoutille (50) à l'aide d'un vérin hydraulique (80), d'une grue ou d'un tire-câble.

23. Procédé selon l'une des revendications 18 à 21, **caractérisé en ce que** l'entrée de l'au moins un premier élément formant rail (30) est effectuée à l'étape a) de telle sorte que des sous-segments soient insérés entre des parties installées à demeure de l'au moins un premier élément formant rail (30).
